# EUROPEAN PATENT SPECIFICATION

(11) **EP 2 306 872 B1**
(45) Date of publication and mention of the grant of the patent: **15.05.2013**
(21) Application number: 09780211.0
(22) Date of filing: 07.07.2009
(51) Int. Cl.: A47J 31/40, A47J 41/00

(54) **LIQUID FOOD OR BEVERAGE MACHINE WITH MONITORING OF INGREDIENT CHARACTERISTICS**
FLÜSSIGNAHRUNGSMITTEL- ODER GETRÄNKEMASCHINE MIT ÜBERWACHUNG VON ZUTATENEIGENSCHAFTEN
MACHINE À ALIMENT LIQUIDE OU À BOISSON COMPRENANT UNE SURVEILLANCE DE CARACTÉRISTIQUES D'INGRÉDIENT

(30) Priority: 21.07.2008 EP 08160831
(43) Date of publication of application: 13.04.2011
(73) Proprietor: Nestec S.A., 1800 Vevey (CH)
(72) Inventor: JARISCH, Christian, 1095 Lutry (CH); PHAN, Minh Quan, CH-1030 Bussigny (CH)
(74) Representative: Sivier, Damien
(86) International application number: PCT/EP2009/058545
(87) International publication number: WO 2010/009975

(56) References cited:
- WO-A-2006/044782
- DE-U1-202005 015 851
- GB-A- 2 417 116
- US-A1- 2006 191 919

## Description

### Field of the Invention

The field of the invention concerns containers that are arranged for containing a substance, in particular a food or beverage ingredient, whose characteristics should be controlled/monitored and that are for example usable in liquid food or beverage preparation machines.

### Background Art

Liquid food and beverage preparation machines are becoming very popular whether at home or in offices. There is a demand for machines that can prepare and deliver different beverage specialties; in particular, coffee and/or milk based beverages.

A simple beverage dispenser is disclosed in WO 2006/044782. This dispenser has a tank for containing a beverage. The tank has a capacitive level sensor that dips in the beverage. The capacitive sensor is connected from inside to outside the tank via electric wires to a display unit located on the outside of the dispenser.

For instance, machines exist for both extracting coffee capsules or pods and delivering milk froth thus providing the possibility to prepare both espresso coffee, cappuccino and macchiato.

Generally speaking, there are two possibilities to prepare a milk-containing liquid food or beverage with a home or office machine. Either powder milk or fresh milk may is used.

Various systems are known to condition fresh milk, in particular froth the milk, in such machines. Such prior art systems are for example disclosed in DE 1131372, DE 1554670, DE 19611450, DE 19624648, DE 19719784, DE 4037366, DE 8915094, DE 202007009537, DE 102004063285, EP 0 344 859, EP 0 480 928, EP 607 759, EP 0 813 834, EP 0 858 757, EP 1 197 175, EP 1 223 839, EP 1 597 992, EP 1 716 796, EP 1 731 065, EP 1 827 188, FR 769 848, FR 2 708 185, US 2,932,493, US 3,182,975, US 3,356,349, US 4,162,855, US 4,537,332, US 4,479,908, US 5,133,247, 5,265,519, US 5,295,431, US 5,473,972, US 6'318'247, US 6,712,497, US 7,322,282, US2002/0134248, WO 90/10411, WO 96/22830, WO03/003888, WO2004/043213, WO2006/050900, WO2006/122916, WO 2008/046837 and PCT/EP08/056349.

More particularly, EP 0 344 859 and EP 0 813 834 disclose a frothing system that has an open vessel or container of milk in which a steam-air pipe arrangement dips and sucks milk for frothing. EP 0 480 928 discloses a cappuccino machine which has a bin for accommodating a milk carton for the supply of milk to the machine's milk frothing arrangement.

To avoid degradation of milk in such systems held usually at ambient temperature, it is possible to use a thermos bottle to keep the milk at an acceptable temperature for an extended period of time. By filling such a thermos with milk at 4°C it may be possible to keep the milk for about 8 hours. However, in practice, it is difficult for the user to know at a given period of time whether or not milk that is contained in the thermos is still drinkable.

Another solution is disclosed in US 5,473,972. This patent discloses a cappuccino machine with a frothing device cooperating with a milk container which is removable from the machine so that it can be placed in a refrigerator between two cappuccino preparations in order to prevent spoiling of the milk. However, this solution offers no guarantee for a user that the milk that he uses has not been previously allowed to be spoiled because it remained, at a given period of time, for too long outside the refrigerator.

FR 2 708 185 teaches that the spoiling of the milk can be prevented by including in the cappuccino machine a refrigerating system for the milk container. This solution involves the use of a refrigerating system exclusively dedicated for the coffee machine and is thus relatively expensive and requires a involves a relatively high permanent energy consumption as well.

GB 2 417 116 discloses a drug dispensing system which has a locking mechanism equipped with a biometric user authentication system. The system has a control device that stores and transmits data by RFID. The drugs contained by the dispensing system are authenticated by an RFID tag so that only authorised and authenticated persons can have access to the drug identified via its tag by the system.

DE 20 2005 015 851 discloses a documentation system with a thermally insulated transporter for carrying food trays. The transporter and the trays are made of induction capable multilayer material and include a temperature sensor with a RFID transponder. On request, the RFID transponder provides the ID of the transporter in which the transponder is incorporated and registered or present temperature measures inside the transporter.

US 2006/0191919 discloses a cup, bowl, bottle, kettle or basin for containing heated food and provided with a temperature sensor and a display for displaying the sensed temperature.

### Summary of the Invention

It is a preferred object of the invention to provide a system for containing a degradable substance, such as milk, which system is arranged to prevent use of such substance upon degradation.

It is another preferred object of the invention to provide a system which can be retrofitted in existing systems for containing a degradable liquid food, such as milk, which system is arranged to prevent use for consumption of such liquid food that is degraded.

More generally, the invention relates to a container that comprises: a cavity for storing a dispensable substance, such as a food or beverage ingredient, in particular a liquid such as milk or another temperature degradable substance; and a device for measuring one or more characteristics of the dispensable substance and for transmitting such characteristic(s) outside the cavity.

In accordance with the invention, the device comprises a transmitter arranged for wireless communication of a signal representative of such measured characteristic(s) outside the cavity, in particular a sound and/or electromagnetic wave signal. For example, ultrasound signals may be used for wireless communication. The electromagnetic wave signal may be of low frequency, high frequency or ultra-high frequency, typically a frequency in the range of 30 kHz to 3 GHz, in particular from 100 to 1000 kHz, such as from 120 to 150 kHz. For instance, one may choose a frequency around 125 or 135 kHz.

Typically, the cavity is substantially closed or closable to separate the substance inside the cavity from the environment. For instance, usually the closed cavity has an outlet, e.g. incorporating a duct or connected thereto, in particular a closable outlet, for the supply of substance on request. The closed cavity may also have a closable lid or an inlet for filling or refilling the cavity with substance. In this case, the device can be entirely enclosed in this closed or closable cavity.

In line with the wireless signal communication, the device is normally arranged with a wireless power supply system.

By providing such a device for a wireless communication from inside to outside the container's cavity, the substance inside the cavity may be monitored without having to intervene or open the container's cavity or having to use a device that extends inside the cavity from outside, e.g. via communication or power supply cables. Hence, no or substantially no contamination, alteration or disturbance of the substance from factors external to the container's cavity take place due to the measuring of the substance's characteristic(s). Moreover, such a measuring and transmitting device may be retrofitted in existing containers without altering or significantly altering the container's existing structure.

For example, the transmitter includes an antenna to communicate a radio signal. The transmitter may include an optoelectronic element to communicate an optical signal, which may be a light signal in the visible range or an infrared or ultraviolet light signal.

In one embodiment, this device is arranged to be powered by an autonomous electric source, such as a battery, contained within the device. Typically, the battery is suitable to power the transmitter and the measuring arrangement. For example, a device operating with a wireless ultrasound communication may be combined with such an autonomous powering.

In another embodiment, the device is arranged to be powered by an electric current induced by an incoming electromagnetic signal, in particular a radio signal, from outside the cavity. It is also contemplated to induce the current by an optical incoming signal. Likewise, this incoming current may be used to power the transmitter and the measuring arrangement. Typically, the incoming current is induced in the transmitter and then communicated to the measuring arrangement in the device.

For example, the transmitting and measuring device incorporates a RFID-like power supply and signal communication technology. The current induced by an incoming radio frequency via an antenna (or by an incoming optical signal via an optic-electric converter) of the device provides the needed power to power the device's measuring arrangement and to return via the antenna (or a light emitter) a signal representative of the measured characteristic(s) outside the container. Typically, the device includes an integrated circuit, such as a CMOS circuit, that is arranged to process the incoming and outgoing signal. In a variation, the device may include an electromagnetically induced power supply arrangement, for instance of the RFID type, combined with a wireless sound or ultrasound communication arrangement.

In other words, the device may include an arrangement for a distant wireless power supply.

Such an induced power supply arrangement involves several advantages. In particular, the device does not require any battery (or external power cabling) to operate and no battery replacement by the user is need at any time. The device may easily be encapsulated or otherwise made entirely waterproof, for example to simplify cleaning, as no access inside the device by the user is required at any time and thus no such access has to be provided at all. Furthermore, no mechanical contact is required for powering the device, which reduces the wear rate.

This is particularly advantageous for a retrofit of the device in an existing container for containing a dispensable substance, since the device only requires an initial set up and then virtually no further operation by the user that would be specifically dedicated to handle this retrofitted device. Hence, the user will generally continue to use the system as he is used to, while the system itself offers further advantages, in particular relating to the quality control of the dispensable substance.

Active and passive RFID technologies, which can be utilised for the wireless communication arrangement, are well known and spread in the art of tracking items, objects, animals and even humans, in particular for tracking and monitoring goods for sale. See for example US 4, 384, 288, 5, 874, 896 and 6,172,609.

Typically, the transmitter comprises an antenna to communicate radio information from and/or to the measuring and transmitting device, and/or for supplying radio powering energy to this device.

The measuring and transmitting device comprises a level sensor and/or a temperature sensor for measuring said one or more characteristics, in particular a temperature sensor and/or a level sensor that is/are located in a bottom part of the closed cavity.

The cavity can have a passage for the outlet of substance from the cavity, in particular a closable passage. Moreover, the cavity may have an opening for the inlet of substance, in particular an opening covered with a removable lid. The measuring and transmitting device can be secured to this removable lid. For example, the container has a tubular outlet for the substance, typically a liquid such as a liquid food or beverage substance.

The cavity may be thermally insulated to maintain the substance at a temperature above or below ambient temperature. The cavity is in particular formed within a vacuum flask such as a thermos-like vessel.

Another aspect of the invention relates to a dispenser, such as a liquid food of beverage dispenser, in particular a tea and/or coffee machine.

For instance, the dispenser is a coffee, tea or soup machine, in particular a machine for supplying a beverage or liquid food by passing hot or cold water or another liquid through a capsule containing an ingredient of the beverage or liquid food to be supplied, such as ground coffee. The term "capsule" means any type of suitable packages containing portioned food ingredients adapted to be inserted in the extraction/brewing chamber such as a sealed aluminum or plastic capsule and/or a filter pod.

The substance contained in the container's cavity may be a temperature degradable food substance, such as liquid milk, that is used in the process of preparing the liquid food or beverage with the dispenser. Conveniently, the measuring and transmitting device is arranged to measure the temperature and the level of the degradable food substance and stop dispensing of liquid food or beverages including such degradable food substance when its level in the cavity has reached a minimum that does not allow a further liquid food or beverage preparation or when its temperature has reached a level leading to degradation, for instance a temperature exceeding 10 or 15°C for milk.

The dispenser comprises: a container for the supply of a dispensable substance, in particular a liquid such as milk or another temperature degradable substance, as described above; and a transducer that is located outside the container's cavity and that is arranged to receive from the transmitter located inside the container's cavity a wireless signal representative of said one or more characteristics, in particular a sound and/or electromagnetic wave signal.

The dispenser's transducer may include an antenna to receive a radio signal from said container's transmitter. As indicated above, it is also possible to arrange an optical signal communication between the transmitter and the transducer.

In an advantageous embodiment, the device is arranged to be powered by an electric current induced by an incoming electromagnetic signal, in particular a radio signal, from outside the cavity, the incoming electromagnetic signal being in particular emitted by the dispenser's transducer.

The dispenser is arranged, e.g. includes a controller or processor, to monitor the substance's characteristics and allow or prevent the dispensing of the dispensable substance from the container when a monitored characteristic reaches a threshold value. The dispenser is arranged to prevent dispensing of the dispensable substance from the container when the substance reaches a minimum level in the cavity and/or when the substance has a temperature that exceeds a maximum or a minimum temperature. The dispenser can be arranged to monitor permanently or periodically such characteristic(s) or to monitor such characteristic(s) intermittently, in particular upon a request for dispensing the dispensable substance.

In one embodiment, the dispenser has a housing, the dispenser's transducer being built within the housing. Typically, such a dispenser is manufactured with an integrated transducer.

In another embodiment, the dispenser has a housing, the dispenser's transducer being located outside the housing. Typically, the dispenser's transducer is retrofitted into or onto the dispenser at a later stage after manufacturing of the dispenser.

### Brief Description of the Drawings

The invention will now be described with reference to the schematic drawings, wherein:
- Figure 1 shows a perspective view of a container according to the invention;
- Figure 2 shows a perspective view of the lid of the container shown in Fig. 1, a measuring and transmitting device being secured to the lid;
- Figure 2a shows an exploded view of the container's lid with the measuring and transmitting device shown in Fig. 2;
- Figure 3 shows a perspective view of the measuring and transmitting device shown in Figs 2 and 2a;
- Figures 4 to 5a illustrate a container housed in a dispenser according to the invention; and
- Figures 6 to 7a illustrate a container housed in another dispenser according to the invention.

### Detailed description

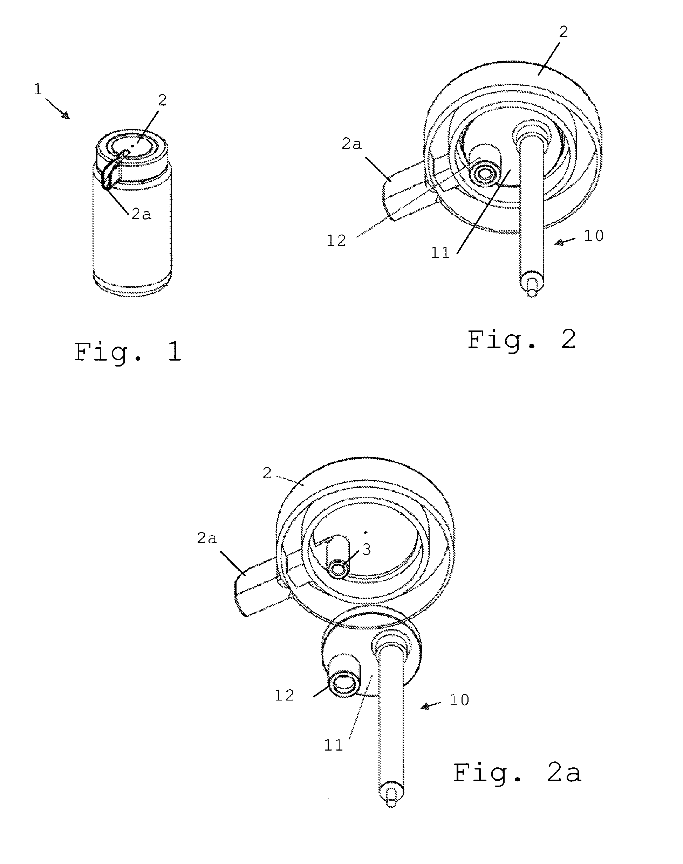

Figure 1 shows a container 1 according to the invention with a lid 2 delimiting a closed inner cavity. Container 1 includes a vacuum flask such as a thermos-like vessel for containing a temperature degradable liquid such as milk.

For example, the container's cavity may be filled with fresh milk at about 4°C from the fridge for use in a beverage preparation machine such as a tea or coffee machine that includes the option of dispensing hot or cold, frothed or un-frothed milk as such or within a milk-containing beverage. To avoid food poisoning or simply dispensing of degraded milk, such milk should not be used once its temperature has exceeded 10 to 15°C. In a vacuum flask, such milk may be maintained at an acceptable temperature typically for about 8 hours. To avoid dispensing of degraded milk, the container includes a device to monitor the temperature of the milk in the container's closed cavity.

Moreover, the container's lid 2 has a generally tubular vertical outlet passage 3 extending into a generally groove 2a on the outer top surface of lid 2 for a suction tube or straw (not shown) that is used for the outlet of liquid from the container's cavity. Preferably, such a suction tube extends to a bottom part of the cavity. The suction tube or straw may cooperate with a venturi or pump arrangement for promoting the circulation of liquid from container 1.

As shown in Figs 2 and 2a, the inner face of lid 2 that delimits the upper part of the container's inner cavity holds a device 10 for measuring one or more characteristics of the dispensable substance and for transmitting such characteristics outside container 1. The measured characteristics are typically the temperature of the substance, e.g. milk, and its level in the container's cavity.

As shown in Figure 2a, device 10 has a base 11 that matches the inner side of lid 2 and that is secured to lid 2 by a tubular screw member 12 assembled to a corresponding threaded tube 3 of lid 2. Alternatively base 11 may be clipped or force fitted to lid 2. Preferably, device 10 can be disassembled from lid 2 for cleaning.

Hence, device 10 is entirely enclosed in the container's cavity when covered by lid 2. In other words no parts, no connectors of device 10 extend outside container 1. On the contrary, device 10 is entirely concealed inside container 1 and does not require any passage through the container's walls or lid 2 for connection with the outside of container 1.

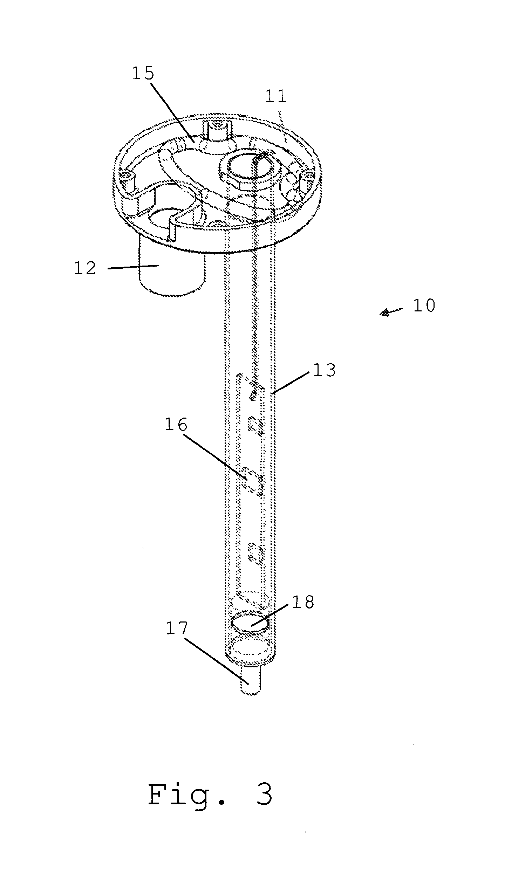

Figure 3 shows in greater detail this measuring and transmitting device 10. In accordance with the invention, device 10 includes a transmitter having an antenna 15 forming a loop and connected to an integrated electronic circuit 16.

A temperature sensor 17, for instance a thermocouple-based or thermoresistive-based or thermistor-based sensor or any other system allowing the measuring of a temperature, and level sensor 18 are also connected to circuit 16. Temperature and level sensor 17,18 may be standard sensors for measuring, as characteristics of the liquid contained in container 1, the temperature and the level in the container's cavity. For instance level sensor 18 is a capacity-type sensor and detects when the level of liquid in the container's cavity passes below level sensor 18.

Transmitter 15,16 is arranged for a wireless communication of a radio signal representative of these characteristics, i.e. the temperature and level of the liquid in container 1, outside the container's closed cavity.

Moreover, device 10 is arranged to be powered by an electric current induced in antenna 15 by an incoming radio signal from outside the container's cavity, and then conducted to circuit 16. This induced current serves to power not only transmitter 15,16 but also sensors 17,18 so as to enable transmitter 15,16 to emit a radio signal via antenna 15 representative of the temperature and level measured by sensors 17,18.

Hence, such a device 10 may be mounted into container 1 during its manufacture, or added or retrofitted into container 1, at a later stage, without having to modify the container's structure. In other words, it is not necessary to drill holes through container 1 or otherwise machine parts of container 1 if device 10 is retrofitted in container 1.

Moreover, circuit 16 and sensors 17,18, shown in dotted lines in Fig. 3, are encapsulated in a tube 13 that extends from base 11 down the cavity of container 1 in such a manner as to locate sensors 17,18 at a level close to a bottom part or the container's cavity.

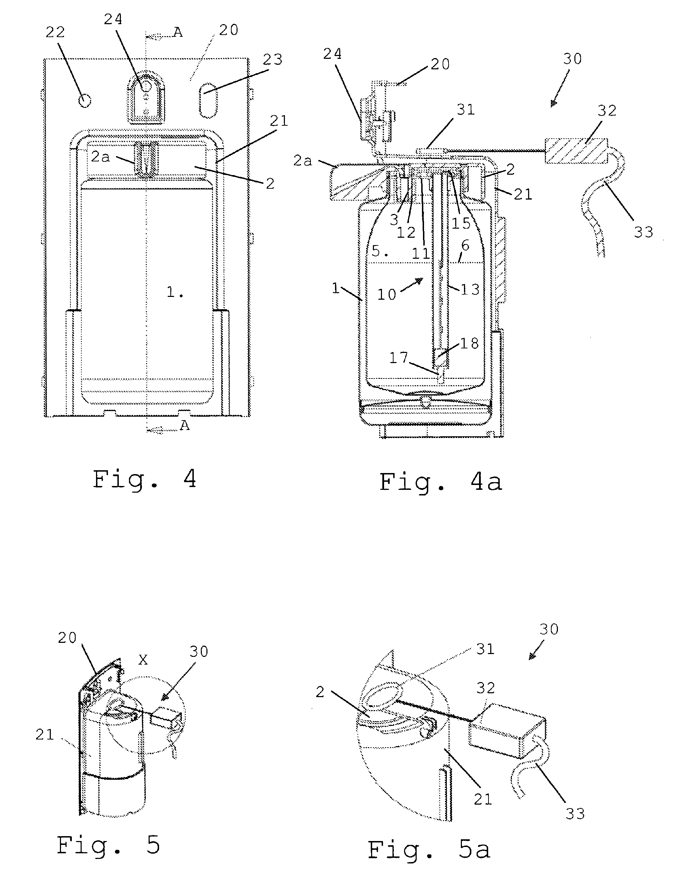

Figures 4 to 7a, in which the same numeric references designate the same elements, illustrate container 1 with a device 10, as shown in the previous Figures, when mounted in the housing 20 of a dispenser, in accordance with the invention.

The dispenser partly shown in Figs 4 to 5a incorporates a built-in radio frequency transducer 30. Figure 4a shows a cross-sectional view along line AA of the dispenser partly shown in Figure 4. Figure 5a shows an enlarged view of a detail delimitated by the circle X marked on the dispenser partly shown in Figure 5.

The dispenser has a housing 20 with a cavity 21 for accommodating container 1 in the dispenser. Furthermore, Housing 20 has openings 22,23 for the passage of user interfaces, such as switches, buttons or the like (not shown), for instance a master or main switch and a dispensing switch, as well as an opening 24 for the passage of a vapour duct (not shown) to cooperate with the abovementioned suction tube or straw to promote the circulation of liquid from the container's cavity by a venture arrangement, for example as disclosed in the prior art cited in the outset.

Transducer 30 is located inside housing 20 and has an antenna 31 that is located outside the container's cavity 5. Antenna 31 is positioned on top of housing cavity 21 vertically above antenna 15 of measuring and transmitting device 10.

Antenna 31 is connected to an electronic circuit 32 for demodulating the radio signal and transmitting a corresponding electric signal via connector 33 to a controller or processor (not shown) of the dispenser. Antenna 31 and circuit 32 in housing 20 are arranged to exchange radio signals with antenna 15 and circuit 16 of device 10 through lid 2 and housing 20.

Moreover, antenna 31 and circuit 32 are arranged to emit signals for inducing an electric current in antenna 15 sufficient to power circuit 16 and sensors 17,18 to measure the desired characteristics of a liquid 6 in the container's cavity 5, convert these characteristics into corresponding electric signals by sensors 17,18, modulate these signals by circuit 16 and emit radio signals representative thereof via antenna 15 to antenna 31. The signal received by antenna 31 is then demodulated by circuit 32 and communicated via connector 33 to the dispenser's controller or processor.

When the controller or processor receives a signal from circuit 32 which indicates that the measured characteristics of liquid 6 have reached a critical value, e.g. that the temperature of liquid 6 is too high or that the level of liquid 6 is too low and has passed below sensor 18, the dispenser is arranged to stop dispensing any liquid food or beverage containing liquid 6 until cavity 5 of container 1 has been refilled with a liquid 6 having the appropriate characteristics.

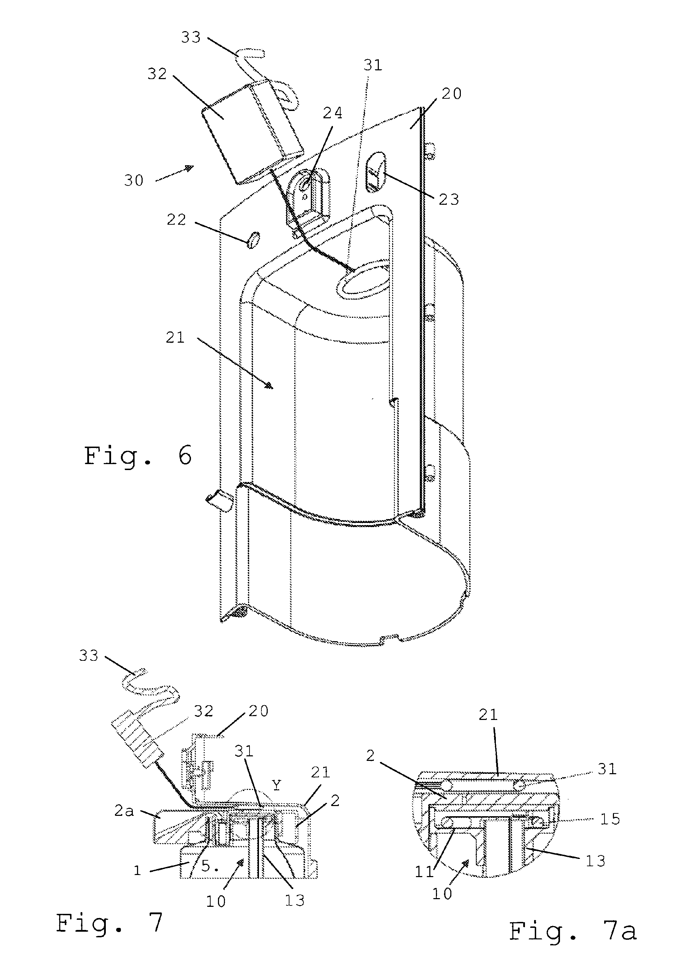

The dispenser shown in Figs 6 to 7a show a variation of the dispenser in which the radio frequency transducer 30 is retrofitted onto the dispenser's housing 20. In particular, Figure 6 illustrates the location of transducer 30 retrofitted on the dispenser's housing 20. Figure 7a shows an enlarged view of a detail delimitated by the circle Y indicated on the dispenser partly shown in cross-section in Figure 7.

Unlike transducer 30 shown in Figs 4a to 5a that was mounted inside the housing 20 at the manufacturing of the dispenser, transducer 30 illustrated in Figs 6 to 7a, has been retrofitted on the outside of dispenser's housing 20 after assembly of the dispenser.

More particularly, transducer 30 has an antenna loop 31 that is secured, for instance by gluing, in cavity 21 of housing 20 to face directly container 1, when container 1 is in place in cavity 21. Antenna 31 is preferably positioned to be located generally parallel and vertically above antenna loop 15 of device 10 to optimise the transfer of radio signals between the antennas 15,31.

Like before, antenna 31 is connected to an electronic circuit 32 which is in turn connected via connector 33 to a controller or processor (not shown). However, since transducer 30 is retrofitted, connector 33 may be connected via an external interface (not shown) of the dispenser to the dispenser's controller or processor. The interface may be of any standard, for instance a USB, RS232 or IEEE interface, and may be configured for the parameterisation or servicing of the distributor. In this case, the program of the dispenser may be updated to incorporate the new functionalities offered by the presence of device 10. The update process may be initiated by transducer 30 or separately via the same or a different interface of the dispenser.

Electronic circuit 32 is contained in a box that may be glued or taped or otherwise secured, for instance with a magnet, on any appropriate location, in particular external location of housing 20.

In a variation of the device illustrated in these Figures, it will be evident to the skilled person that the measuring and transmitting device may be powered by a battery that can be housed in the device's base, instead of being powered by a current induced from the corresponding transducer located in or on the dispenser. Likewise, the wireless communication may be carried out by way of an optic or sound signal. Furthermore,. The device may be powered by an external optical source, as mentioned above.

## Claims

1. A dispenser comprising:
● a container (1) comprising:
- a cavity for storing a dispensable substance; and
- a device (10) for measuring one or more characteristics of the dispensable substance and for transmitting said one or more characteristics outside the cavity, said device comprising a transmitter (15,16) arranged for wireless communication of a signal representative of said one or more characteristics outside the cavity;
● a transducer (30) that is located outside the container's cavity and that is arranged to receive from the transmitter (15,16) located inside the container's cavity a wireless signal representative of said one or more characteristics.
the dispenser being arranged to monitor said one or more characteristics and prevent the dispensing of said dispensable substance from the container when said substance reaches a minimum level in the cavity and/or when said substance has a temperature that exceeds a maximum or a minimum temperature.

2. The dispenser of claim 1, wherein said transducer includes an antenna to receive a radio signal from said transmitter.

3. The dispenser of claim 1 or 2, wherein the device is arranged to be powered by an electric current induced by an incoming electromagnetic signal, in particular a radio signal, from outside the cavity, the incoming electromagnetic signal being in particular emitted by said transducer.

4. The dispenser of any one of claims 1 to 3, which has a housing, the transducer being built within the housing, or located outside the housing, the transducer being in particular retrofitted into or onto said dispenser.

5. The dispenser of any one of claims 1 to 4, which is a beverage or liquid food dispenser, in particular a coffee, tea or soup machine, such as a machine for supplying milk as said dispensable liquid, as such or within a milk-containing beverage or liquid food.

## Patentansprüche

1. Abgabevorrichtung mit:
● einem Behälter (1), der folgendes aufweist:
- einen Hohlraum zur Aufbewahrung einer abgabefähigen Substanz; und
- eine Vorrichtung (10) zum Messen einer Eigenschaft oder mehrerer Eigenschaften der abgabefähigen Substanz und zur Weiterleitung dieser einen Eigenschaft oder mehrerer Eigenschaften außerhalb des Hohlraumes, wobei die Vorrichtung einen Sender (15, 16) aufweist, der für eine drahtlose Kommunikation eines Signals angeordnet ist, das für die eine Eigenschaft oder mehrere Eigenschaften außerhalb des Hohlraumes kennzeichnend ist;
● einen Messwandler (30), der sich außerhalb des Behälterhohlraumes befindet, und der angeordnet ist, um von dem Sender (15, 16), der sich in dem Behälterhohlraum befindet, ein drahtloses Signal zu empfangen, das für eine oder mehrere Eigenschaften kennzeichnend ist,
wobei die Abgabevorrichtung derart angeordnet ist, dass sie eine oder mehrere Eigenschaften überwacht und die Abgabe der abgabefähigen Substanz aus dem Behälter verhindert, wenn die Substanz eine Mindesthöhe in dem Hohlraum erreicht und/oder wenn die Substanz eine Temperatur besitzt, die eine Höchsttemperatur oder eine Mindesttemperatur überschreitet.

2. Abgabevorrichtung nach Anspruch 1, wobei der Messwandler eine Antenne aufweist, um ein Funksignal von dem Sender zu empfangen.

3. Abgabevorrichtung nach Anspruch 1 oder 2, wobei die Vorrichtung derart angeordnet ist, dass sie von einem elektrischen Strom mit Energie versorgt wird, der durch ein hereinkommendes elektromagnetisches Signal, insbesondere ein Funksignal, von außerhalb des Hohlraumes induziert wird, wobei das hereinkommende elektromagnetische Signal insbesondere durch den Messwandler abgegeben wird.

4. Abgabevorrichtung nach einem der Ansprüche 1 bis 3, die ein Gehäuse aufweist, wobei der Messwandler innerhalb des Gehäuses eingebaut ist oder sich außerhalb des Gehäuses befindet, wobei der Messwandler insbesondere in oder auf der Abgabevorrichtung nachgerüstet ist.

5. Abgabevorrichtung nach einem der Ansprüche 1 bis 4, bei der es sich um eine Abgabevorrichtung für Getränke oder Flüssignahrungsmittel handelt, insbesondere eine Kaffee-, Tee- oder Suppenmaschine, wie beispielsweise eine Maschine für die Bereitstellung von Milch als abgabefähiger Flüssigkeit als solcher oder in einem Milch enthaltenden Getränk oder Flüssignahrungsmittel.

## Revendications

1. Distributeur comportant:
● un conteneur (1) comportant:
- une cavité pour stocker une substance distribuable; et
- un dispositif (10) pour mesurer une caractéristique ou plusieurs caractéristique de la substance distribuable et pour transmettre ledit une ou plusieurs caractéristiques à l'extérieur de la cavité, ledit dispositif comportant un transmetteur (15, 16) agencé pour une communication sans fil représentatif de ladite une caractéristique ou plusieurs caractéristiques à l'extérieur de la cavité.
● un transducteur (30) qui est disposé à l'extérieur de la cavité du conteneur et qui est agencé pour recevoir du transmetteur (15, 16) disposé dans la cavité du conteneur un signal sans fil représentatif de ladite une caractéristique ou plusieurs caractéristiques,
le distributeur étant agencé pour surveiller ladite une caractéristique ou plusieurs caractéristiques et empêcher la distribution de ladite substance distribuable du conteneur lorsque ladite substance atteint un niveau minimum dans la cavité et/ou lorsque ladite substance a une température qui dépasse une température minimum ou une température maximum.

2. Distributeur selon la revendication 1, ledit transducteur comportant une antenne pour recevoir un signal radioélectrique dudit transmetteur.

3. Distributeur selon la revendication 1 ou 2, le dispositif étant agencé pour être alimenté par un courant électrique induit par un signal électromagnétique entrant, notamment un signal radioélectrique, de l'extérieur de la cavité, le signal électromagnétique entrant étant notamment émis par ledit transducteur.

4. Distributeur selon l'une quelconque des revendications 1 à 3, qui a un boîtier, le transducteur étant intégré dans le boîtier ou disposé à l'extérieur du boîtier, le transducteur étant notamment rééquipé dans ou sur ledit distributeur.

5. Distributeur selon l'une quelconque des revendications 1 à 4, qui est un distributeur de boisson ou d'aliment liquide, notamment une machine à café, à thé ou à soupe, comme par exemple une machine pour fournir du lait en tant que liquide distribuable en tant que tel ou dans une boisson ou aliment liquide contentant du lait.
